# FASCICULE DE BREVET EUROPEEN

(11) **EP 2 758 310 B1**
(45) Date de publication et mention de la délivrance du brevet: **16.01.2019**
(21) Numéro de dépôt: 12761734.8
(22) Date de dépôt: 20.09.2012
(51) Int. Cl.: B64G 1/00, B64G 1/64, B64G 1/40, B64G 1/24, B64G 1/42, B64G 1/44, B64G 1/50

(54) **BAIE PROPULSIVE**
AUFNAHMESTRUKTUR MIT ANTRIEB
PROPULSION BAY

(30) Priorité: 20.09.2011 FR 1158366
(43) Date de publication de la demande: 30.07.2014
(73) Titulaire: Centre National d'Etudes Spatiales, 75001 Paris (FR)
(72) Inventeur: BULTEL, Pascal, F-77340 Pontault-Combault (FR)
(74) Mandataire: Gaillarde, Frédéric F. Ch.
(86) Numéro de dépôt international: PCT/EP2012/068490
(87) Numéro de publication internationale: WO 2013/041598

(56) Documents cités:
- EP-A1- 0 665 162
- US-A1- 2005 109 878
- HERMEL J ET AL: "MODULAR, ION-PROPELLED, ORBIT-TRANSFER VEHICLE", JOURNAL OF SPACECRAFT AND ROCKETS, AMERICAN INSTITUTE OF AERONAUTICS AND ASTRONAUTICS,REASTON,VA, US, vol. 25, no. 5, 1 septembre 1988 (1988-09-01), pages 368-374, XP000030180, ISSN: 0022-4650

## Description

### DOMAINE TECHNIQUE GENERAL

La présente invention concerne une baie propulsive destinée à être transportée, au moins temporairement, dans un lanceur spatial, comportant un adaptateur pour une coopération avec au moins un système embarqué, au moins temporairement, sur la baie, le système comportant une alimentation électrique.

### ETAT DE L'ART

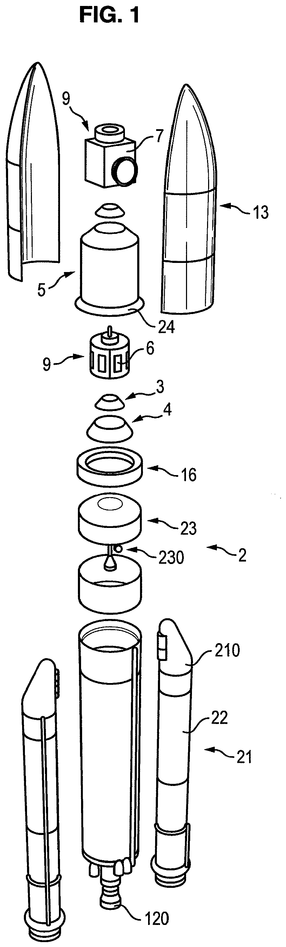

Comme le montre la figure 1, on connaît des lanceurs 2 spatiaux pour le transport, au moins temporaire, d'au moins une case 16 sur laquelle sont fixés des équipements 6 ou 7 et des moyens 230 de propulsion, cf. EP 0 665162.

La case 16 comporte un adaptateur 3, 4 pour une coopération avec au moins le système 6 embarqué sur la case 16, au moins temporairement. Le système 6 embarqué forme en général un satellite artificiel.

Pour l'envoi du système 6 dans l'espace et sa mise sur orbite, le lanceur 2 comporte classiquement plusieurs étages, à savoir :
- un étage 21 de décollage, comportant des propulseurs 210 d'appoint, à propulsion solide connue ;
- un étage 22 inférieur cryogénique comportant un moteur 220, à propulsion liquide connue ;
- un étage 23 supérieur cryogénique comportant un moteur 230, à propulsion liquide connue ; et
- un étage 24 de lancement comportant en son sein le système 6 protégé par une coiffe 13.

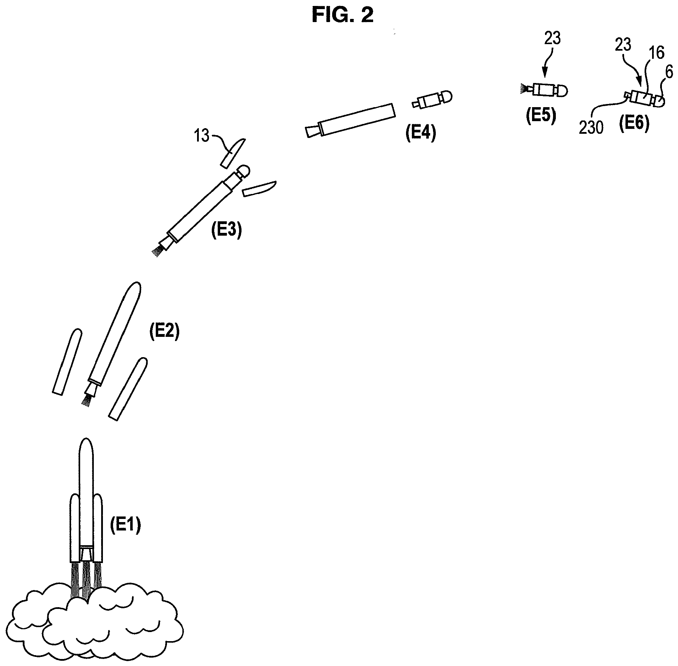

On voit sur la figure 2 que les étages 21 et 22 sont d'abord mis à feu (E1) pour le décollage du lanceur 2, et qu'ensuite seul l'étage 22 est conservé (E2) pour la sortie de l'atmosphère terrestre (l'étage 21 se sépare alors de l'étage 22). La coiffe 13 est ensuite séparé (E3) du lanceur 2 car il est lourd (typiquement 1,7 tonnes) et désormais inutile (à une altitude d'environ 69km, il n'y a plus d'atmosphère), puis l'étage 23 prend (E5) le relai de la propulsion après une étape (E4) de séparation d'avec l'étage 22. Le système 6 sera ensuite séparé de la case 16, une fois le moteur 230 de l'étage 23 coupé (E6), et mis sur orbite.

La technique précédente connue présente cependant des inconvénients.

Le moteur 230 de l'étage 23 est un moteur à propulsion liquide, et offre peu de souplesse d'utilisation (toute coupure de son fonctionnement est en effet définitive). Du fait du moteur 230 à carburants chimiques, la charge utile du lanceur 2 (c'est-à-dire les équipements destinés à remplir une mission déterminée (notamment les systèmes 6 et 7) et que transporte le lanceur 2 (et notamment la case 16)) est limitée et ne peut être injectée que sur une seule orbite.

### PRESENTATION DE L'INVENTION

L'invention permet de pallier au moins un de ces inconvénients.

A cet effet, l'invention propose, selon un premier aspect, une baie propulsive destinée à être transportée, au moins temporairement, dans un lanceur spatial, comportant : un adaptateur pour une coopération avec au moins un système embarqué, au moins temporairement, sur la baie, le système comportant une alimentation électrique.

La baie propulsive de l'invention est caractérisée en ce qu'elle comporte en outre au moins un moteur électrique de propulsion spatiale adapté pour être alimenté par l'alimentation du système.

L'invention est complétée par les caractéristiques suivantes:
- l'adaptateur comporte une structure porteuse comportant un espace interne pour la réception d'un premier système embarqué dans l'espace interne ;
- la structure porteuse comporte une extrémité pour une coopération avec un deuxième système embarqué ;
- le premier système et/ou le deuxième système forment des satellites artificiels ;
- l'adaptateur est adapté pour une coopération avec un troisième système embarqué formant système additionnel de propulsion spatiale, liquide ou solide.
L'invention selon le premier aspect est avantageusement complétée par la caractéristique suivante que la structure porteuse comporte des ouvertures adaptées pour un déploiement de panneaux solaires de l'alimentation d'un premier système formant satellite artificiel, par les ouvertures.

Et l'invention propose, selon un second aspect, un ensemble caractérisé en ce qu'il comporte : une baie propulsive selon le premier aspect de l'invention destinée à être transportée, au moins temporairement, dans un lanceur spatial.

L'invention selon le second aspect est avantageusement complétée par une des caractéristiques suivantes:
- l'alimentation électrique comporte des panneaux solaires et la structure porteuse comporte des ouvertures adaptées pour un déploiement des panneaux solaires ;
- l'alimentation électrique comporte un générateur nucléaire.

L'invention présente de nombreux avantages.

L'invention prévoit, par rapport à l'art antérieur connu et présenté dans la partie introductive de la présente demande, une baie propulsive additionnelle.

L'invention permet de prévoir une propulsion souple d'utilisation, car elle utilise au moins un moteur électrique de propulsion spatiale, de poussée faible mais très performante.

L'invention permet une mutualisation des ressources dans le lanceur, car elle permet l'utilisation de l'alimentation électrique d'un système embarqué sur la baie pour l'alimentation électrique du moteur électrique précité de la baie : le gain de masse sur la baie peut ainsi être transformé en une augmentation de la charge utile.

L'invention permet ainsi d'augmenter la charge utile du lanceur, et notamment d'augmenter la masse des systèmes embarqués sur la baie, notamment la masse des satellites artificiels.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- les figures 1 et 2, déjà commentées, représentent schématiquement respectivement un lanceur connu et son mode de lancement ;
- les figures 3 et 4 représentent schématiquement des vues d'une baie selon l'invention, en perspective et en transparence partielle ;
- les figures 5 et 6 représentent schématiquement respectivement une vue supérieure et une vue inférieure d'une baie selon les figures 3 et 4 ;
- la figure 7 représente schématiquement un mode de réalisation possible d'un moteur électrique de propulsion spatiale, pouvant être utilisé sur une baie selon les figures 3 à 6 ;
- la figure 8 représente schématiquement un montage électrique possible pour une alimentation électrique, par un système embarqué sur la baie, pour un moteur électrique de la baie selon l'une des figures 3 à 6 ;
- la figure 9 représentent schématiquement une vue de côté d'un adaptateur d'une baie selon l'invention ;
- la figure 10 représente schématiquement une vue d'un détail d'un adaptateur selon la figure 9, en perspective et en transparence partielle ;
- la figure 11 représente schématiquement une vue éclatée d'un adaptateur possible d'une baie selon l'invention ;
- la figure 12 représente schématiquement des panneaux solaires déployés d'une alimentation de systèmes embarqués sur une baie selon l'invention ;
- la figure 13 représente schématiquement les options possibles pour un système embarqué formant propulsion additionnelle de la baie selon l'invention ; et
- la figure 14 représente schématiquement un vérin élastique de séparation d'une structure de l'adaptateur de la baie d'avec une partie supérieure de la baie.

Sur l'ensemble des figures, les éléments similaires portent des références numériques identiques.

### DESCRIPTION DETAILLEE

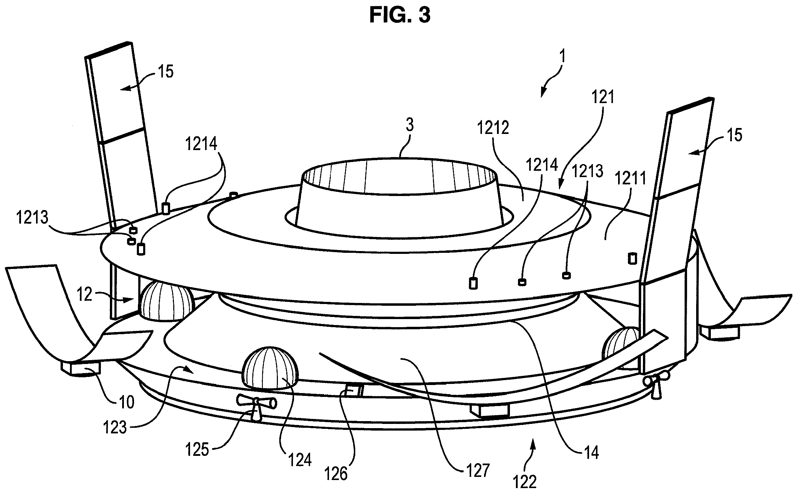

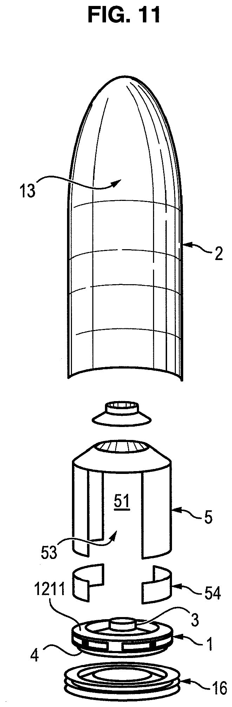

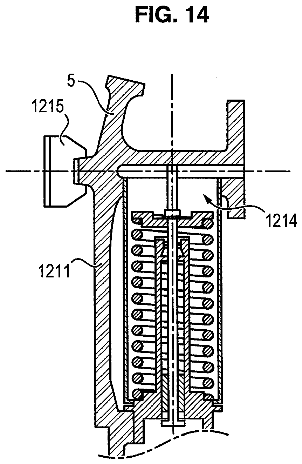

Les figures 3 à 14 représentent schématiquement un mode de réalisation possible d'une baie 1 propulsive selon l'invention.

La baie 1 est destinée à être logée dans un lanceur 2.

Par rapport au lanceur 2 présenté en référence à l'art antérieur, la baie 1 est additionnelle et est logée dans le lanceur 2, au moins temporairement, au niveau d'une case 16. Aucune adaptation du lanceur 2 n'est nécessaire pour le logement de la baie 1. La baie 1 présente donc des dimensions adaptées pour son logement dans le lanceur 2 : typiquement un diamètre de quelques mètres et une hauteur de l'ordre du mètre. Hormis cette différence, le lanceur 2 transportant la baie 1, au moins temporairement, est conforme à la présentation faite dans la partie introductive de la présente demande et sa description n'est pas reprise ici pour des raisons de clarté et de concision.

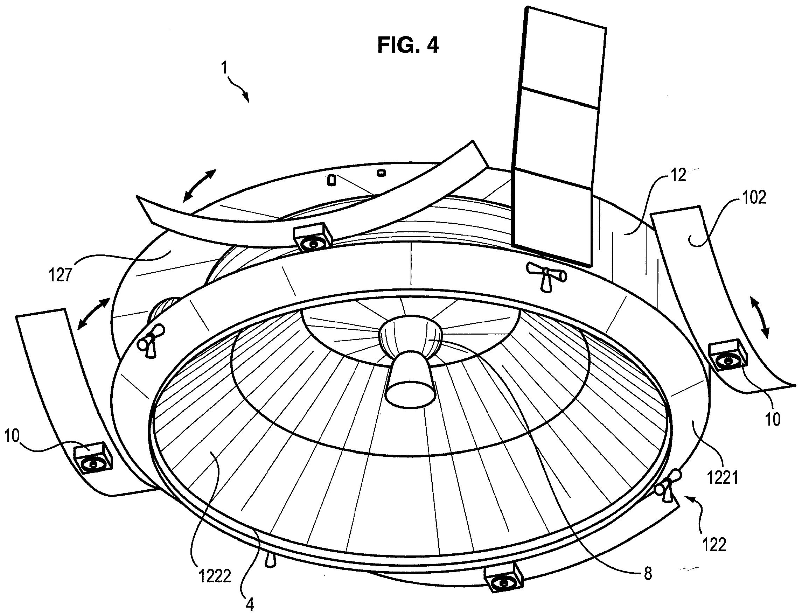

Comme le montrent les figures 3 et 4, la baie 1 présente sensiblement une forme cylindrique aplatie, et comporte principalement une ceinture 12 périphérique et équatoriale, formant un tore comportant un espace 127 interne, et séparant la baie 1 en deux parties, à savoir une partie 121 externe supérieure et une partie 122 externe inférieure.

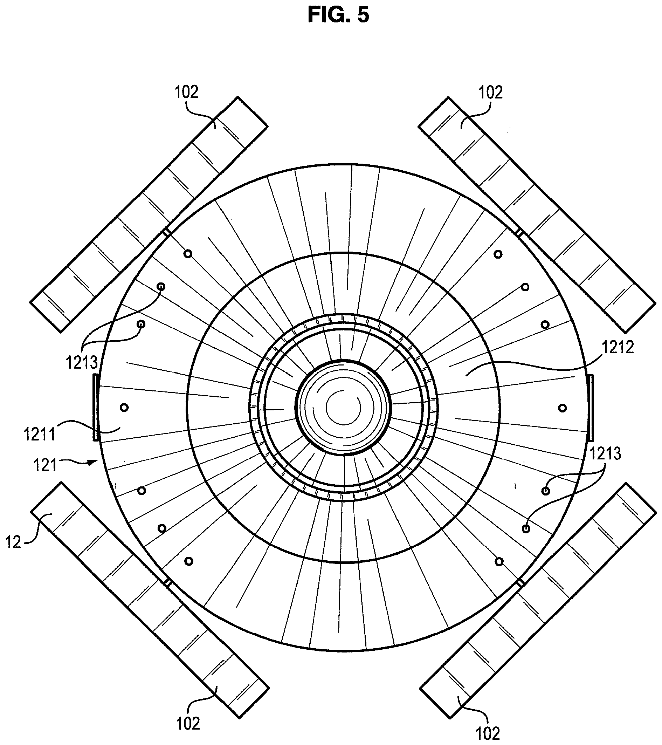

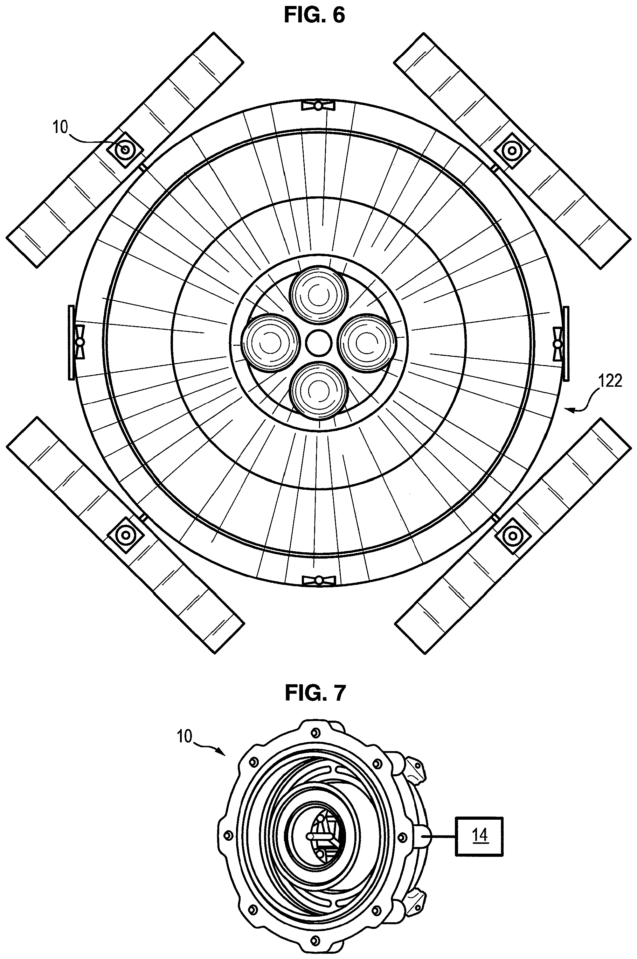

La partie 121 externe supérieure est plus précisément visible à la figure 5, et la partie 122 externe inférieure est quant à elle visible à la figure 6.

L'espace 127 interne comporte en partie basse périphérique un anneau 123, formant plateau porte-équipement, comme par exemple un boitier 126 comportant par exemple un ordinateur de bord de commande et de pilotage de la baie 1.

La baie 1 comporte ainsi également une alimentation 15 électrique, très avantageusement formée par des panneaux solaires 15 de faible puissance, par exemple 4 KiloWatts, pour l'alimentation du boitier 126. Les panneaux 15 sont par exemple au nombre de deux, et disposés de manière diamétralement opposés l'un par rapport à l'autre sur la périphérie de la ceinture 12.

La baie 1 comporte des moteurs 125 de propulsion liquide, par exemple monoergol, et des réservoirs 124 de carburant liquide pour les moteurs 125.

Les moteurs 125 permettent de fournir
- une propulsion supplémentaire nécessaire à la séparation de la baie 1 d'avec l'étage 23, ainsi que
- un contrôle d'attitude de la baie 1 lors de son pilotage après la séparation précitée.

Les moteurs 125 sont ainsi avantageusement au nombre de quatre, et disposés à égale distance les uns des autres sur la périphérie de la baie 1, afin d'obtenir une redondance des moteurs 125 en cas de panne de l'un des moteurs 125 et un effet cardan efficace lors du contrôle d'attitude.

Les réservoirs 124 sont avantageusement en forme de sphères, et sont portés par l'anneau 123 dans l'espace 127.

La baie 1 comporte également principalement un adaptateur 3, 4, 5 pour une coopération avec au moins système embarqué 6, 7, ou 8. Le système embarqué 6, 7, ou 8 est embarqué au moins temporairement sur la baie 1.

Selon un mode de réalisation préférentiel, l'adaptateur 3, 5 est positionné au niveau de la partie 121 supérieure.

La partie 121, plus précisément visible sur les figures 3 et 5, comporte une structure 1211 supérieure de forme sensiblement tronconique en périphérie et plate en partie centrale.

La structure 1211 reçoit l'adaptateur 3 en son centre, l'adaptateur 3 étant de forme conique en saillie par rapport à la structure 1211, pour une coopération, par complémentarité de formes, avec au moins une partie inférieure d'un premier système 6 embarqué, au moins temporairement sur la baie 1.

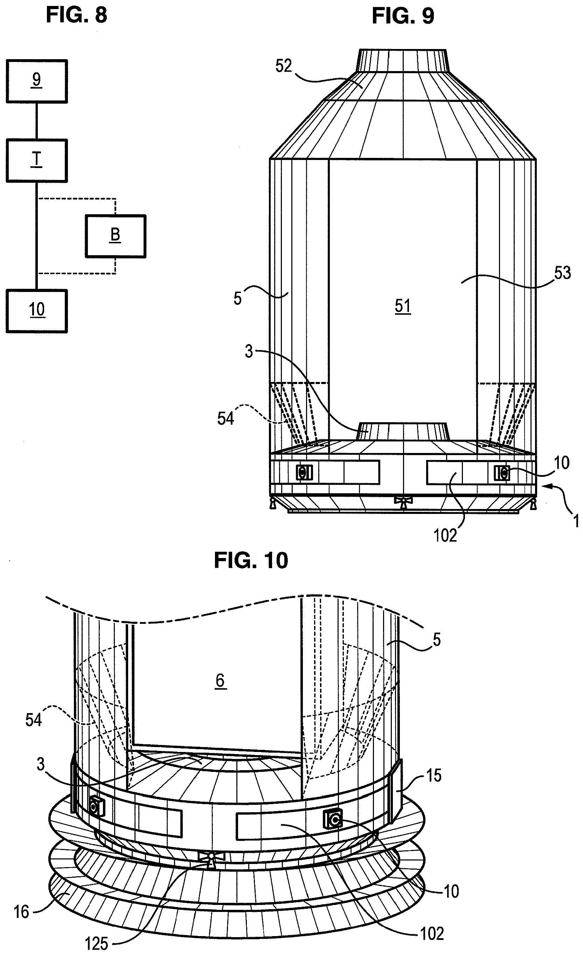

Comme le montrent les figures 9 à 11, l'adaptateur 3, 5 comporte également une structure 5 porteuse de forme sensiblement cylindrique et comportant un espace interne 51 pour la réception du premier système 6 (voir figure 10).

La structure 5 porteuse comporte également une extrémité 52 pour une coopération avec au moins un deuxième système 7 embarqué.

De même que pour la partie de l'adaptateur 3, 5 située au niveau de la structure 1211, l'extrémité 52 est de forme conique formant saillie dans la structure 5 pour la coopération, par complémentarité de formes, avec une partie inférieure du deuxième système 7 embarqué.

De manière tout à fait classique, le premier système 6 forme un satellite artificiel et/ou le deuxième système 7 forme un satellite artificiel. A cet égard, le premier système 6 et/ou le deuxième système 7 comportent une alimentation 9 électrique.

La baie 1 comporte également au moins un moteur 10 électrique de propulsion spatiale, adapté pour être alimenté par l'alimentation 9 du système 6 ou 7. De manière très avantageuse, le moteur 10 est alimenté exclusivement par l'alimentation 9 électrique du premier système 6 et/ou du deuxième système 7. On comprend donc qu'il y a une mutualisation des ressources dans le lanceur, du fait de l'utilisation de l'alimentation électrique d'un système embarqué sur la baie pour l'alimentation électrique du moteur électrique précité de la baie : le gain de masse sur la baie peut ainsi être transformé en une augmentation de la charge utile du lanceur, notamment une augmentation de la masse des systèmes embarqués.

Comme le montre la figure 8, l'alimentation électrique 9 d'un système embarqué est reliée, par un lien électrique de transfert de puissance électrique, au moteur 10 électrique de la baie 1 via un transformateur T électrique, soit directement, soit par l'intermédiaire d'une batterie B de la baie, par exemple placée dans la case 126. Le transformateur T peut être placé sur un système embarqué, ou peut également être placé directement sur la baie 1.

Comme le montre la figure 7, le moteur 10 électrique de propulsion spatiale est adapté pour produire un champ électrique/magnétique et pour pouvoir provoquer une propulsion spatiale en expulsant dans l'espace un carburant sensible au champ électrique/magnétique.

La baie comporte donc également un réservoir 14 de carburant, par exemple de forme torique, et placée dans l'espace 127 interne de la ceinture 12. Le carburant peut être ainsi par exemple du xénon, du crypton, ou de l'argon.

Le moteur 10 peut être de tout type connu par l'homme du métier, par exemple utiliser
- la propulsion électrothermique, et/ou
- la propulsion électromagnétique (propulseur du type magnétoplasma dynamique (MPD) ou accélérateur utilisant les forces de Lorentz (LFA ou Lorentz force accelerator)), et/ou
- la propulsion à force pondéromotrice (EIPT), et/ou
- la propulsion à plasma pulsé (PPT), et/ou
- la propulsion ionique (comme par exemple un propulseur à ignition de champs (FEEP), un propulseur ionique à bombardement, un propulseur à ionisation à radiofréquence ou un propulseur à effet Hall (SPT, PPS, ALT)).

Contrairement à la propulsion liquide offerte par les moteurs 125, qui est utilisée pour une séparation d'avec l'étage 23 et pour des phases de vol requérant une forte propulsion, la propulsion du moteur électrique 10 est relativement peu puissante, mais elle est très souple d'utilisation (mode marche/arrêt à volonté) et a un haut rendement. Le moteur électrique 10 est donc avantageusement utilisé pour des phases nécessitant des poussées faibles mais requérant une haute précision et un haut rendement, par exemple mais non limitativement pour une mise sur orbite définitive d'un satellite artificiel ou pour un changement d'orbite d'un satellite artificiel.

De même que précédemment pour les moteurs 125, préférentiellement, la baie 1 comporte quatre moteurs 10 situés à égale distance l'un de l'autre sur la périphérie de la baie 1 afin d'obtenir une redondance des moteurs 10 en cas de panne de l'un des moteurs et un effet cardan efficace lors du contrôle d'attitude de la baie 1 lors des phases précitées.

Comme le montrent les doubles flèches de la figure 4, les moteurs 10 sont mobiles par rapport à la ceinture 12 entre deux positions, à savoir
- une position escamotée dans laquelle le moteur 10 est plaqué contre la ceinture 12, pour permettre le positionnement de la baie 1 dans le lanceur 2 (la position escamotée des moteurs 10 est par exemple visible sur les figures 9 et 10), et
- une position déployée permettant la propulsion de la baie si nécessaire, visible sur les figures 3, 4, 5 et 6 notamment.

Comme on peut le constater sur les figures 3 et 4, le moteur 10 comporte un support 102, de forme complémentaire à la ceinture 12, et formant également élément radiateur, pour permettre le refroidissement du moteur électrique 10 si nécessaire.

Comme le montrent la figure 4 et la figure 6, selon un mode de réalisation préférentiel, alternatif au mode de réalisation décrit ci-dessus, ou en complément de ce dernier, l'adaptateur 4 est positionné au niveau de la partie 122 inférieure.

La partie inférieure 122 comporte une structure 1221 basse périphérique tronconique, partiellement convexe, et un cône 1222 concave en partie centrale. La structure 1221 et le cône 1222 permettent une reprise des efforts.

Le cône 1222 reçoit en son centre l'adaptateur 4, qui est adapté pour une coopération, par complémentarité de formes, avec système embarqué, par exemple un troisième système 8 embarqué formant avantageusement système additionnel de propulsion spatiale liquide ou solide.

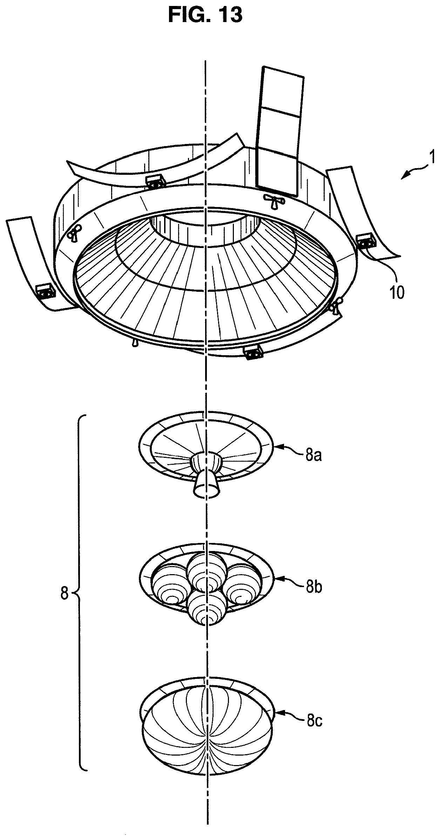

Comme le montre la figure 13, le troisième système 8 peut être, au choix, de type
- propulsion 8a solide connue, ou
- propulsion 8b liquide connue, ou
   ∘stockable
   ∘cryogénique
- propulsion 8c hybride connue, avec réservoir 141 supplémentaire de carburant pour le moteur 10, ou

De même que la propulsion liquide offerte par les moteurs 125, la propulsion offerte par le troisième système 8 peut être utilisée pour une séparation d'avec l'étage 23 et pour des phases de vol requérant une forte propulsion.

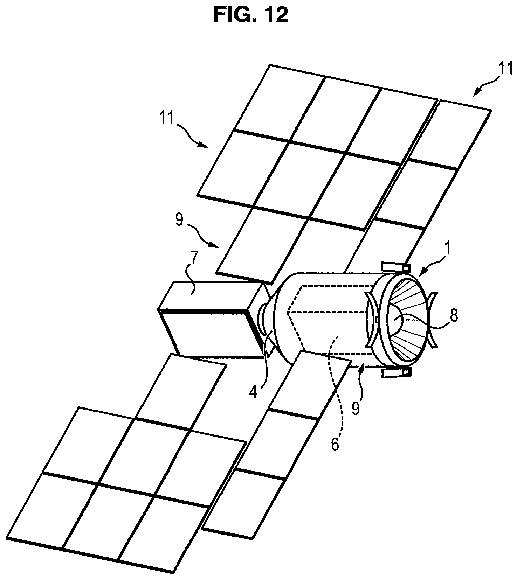

Comme le montre la figure 12, dans le cas tout à fait classique où le premier système 6 forme un satellite artificiel et/ou le deuxième système 7 forme un satellite artificiel, l'alimentation 9 électrique comporte des panneaux 11 solaires, placés sur le premier système 6 et/ou sur le deuxième système 7, et transformant le rayonnement solaire en énergie électrique une fois déployés, notamment à destination du moteur 10. Les panneaux 11 solaires peuvent produire une puissance de l'ordre de 20 kW.

Comme on peut le constater sur la figure 12, afin de pouvoir déployer les panneaux 11 solaires du système 6 encore en place sur l'adaptateur 3, 5, la structure porteuse 5 comporte des ouvertures 53 adaptées pour un déploiement des panneaux 11 solaires de l'alimentation 9.

Afin de garder la rigidité de la structure porteuse 5, malgré la présence des ouvertures 53, la structure 5 comporte des renforts 54 placés entre une partie inférieure de la structure porteuse 5 et la structure 1211 supérieure.

Les renforts 54 peuvent être ainsi sous la forme d'une structure en matériau rigide en treillis, par exemple triangulaire, dont la base prend appui sur la structure supérieure 1211.

De manière avantageuse, dans le cas tout à fait classique où le troisième système 8 forme un système additionnel de propulsion spatiale liquide ou solide, l'alimentation 9 électrique comporte un transformateur T (par exemple représenté sur la figure 8) qui est adapté pour transformer l'énergie mécanique de la propulsion liquide en énergie électrique pour le moteur 10 électrique

Selon une variante, l'alimentation 9 peut comporter un générateur nucléaire au lieu d'un générateur thermique ou solaire, et être par exemple situé au niveau des systèmes 6 ou 7.

De manière classique, la structure 1211 supérieure comporte également des vérins élastiques 1214, connus en eux-mêmes et comportant principalement une tige métallique entourée d'un ressort mécanique, maintenus en sollicitation élastique grâce à des boulons pyrotechniques 1213 et une sangle 1215 périphérique, également connus en eux-mêmes. Au moment de l'explosion des boulons pyrotechniques et de la sangle 1215, les vérins 1214 se déploient et permettent la séparation mécanique de la structure 5 d'avec la structure 1211. Avantageusement, la baie 1 comporte quatre paires de boulons 1213 pyrotechniques et six vérins 1214 de séparation.

On comprend que la baie 1 peut comporter également d'autres éléments que ceux décrits, comme par exemple des trains d'atterrissage placés sur la structure 1221 basse, pour certains types de mission requérant un atterrissage de la baie 1.

## Revendications

1. Baie (1) propulsive destinée à être transportée, au moins temporairement, dans un lanceur (2) spatial, comportant :
- un adaptateur (3, 4, 5) pour une coopération avec au moins un système embarqué (6, 7, 8), temporairement, sur la baie (1), l'adaptateur comportant une structure (5) porteuse comportant un espace interne (51) pour la réception d'un premier système (6) embarqué dans l'espace interne (51), la structure (5) porteuse comportant une extrémité (52) pour une coopération avec un deuxième système (7) embarqué, le premier système (6) et le deuxième système (7) formant des satellites artificiels, l'adaptateur (4) étant adapté pour une coopération avec un troisième système (8) embarqué formant système additionnel de propulsion spatiale, liquide ou solide, le premier système (6), le second système (7) et le troisième système (8) comportant une alimentation (9) électrique, **caractérisé en ce que** la baie propulsive comporte
- au moins un moteur (10) électrique de propulsion spatiale configuré pour être alimenté par l'alimentation (9) du premier ou du second ou du troisième système (6, 7, 8).

2. Baie selon la revendication précédente, dans laquelle la structure porteuse (5) comporte des ouvertures (53) adaptées pour un déploiement de panneaux solaires (11) de l'alimentation (9) d'un premier système (6) formant satellite artificiel, par les ouvertures (53).

3. Ensemble **caractérisé en ce qu'**il comporte :
- une baie (1) propulsive destinée à être transportée, au moins temporairement, dans un lanceur (2) spatial selon l'une des revendications précédentes.

4. Ensemble selon la revendication 3, dans lequel l'alimentation (9) électrique comporte des panneaux solaires et la structure porteuse (5) comporte des ouvertures (53) adaptées pour un déploiement des panneaux solaires (11).

5. Ensemble selon la revendication 3, dans lequel l'alimentation (9) électrique comporte un générateur nucléaire.

## Patentansprüche

1. Antriebssegment (1), das dazu bestimmt ist, mindestens vorübergehend in einer Trägerrakete (2) transportiert zu werden, umfassend:
- einen Adapter (3, 4, 5) für ein Zusammenwirken mit mindestens einem Bordsystem (6, 7, 8), vorübergehend am Segment (1), wobei der Adapter eine Tragstruktur (5) umfasst, die einen Innenraum (51) für die Aufnahme eines ersten Bordsystems (6) in dem Innenraum (51) umfasst, wobei die Tragstruktur (5) ein Ende (52) für ein Zusammenwirken mit einem zweiten Bordsystem (7) umfasst, wobei das erste System (6) und das zweite System (7) künstliche Satelliten bilden, wobei der Adapter (4) für ein Zusammenwirken mit einem dritten Bordsystem (8) geeignet ist, das ein zusätzliches Flüssig- oder Feststoff-Raumantriebssystem bildet, wobei das erste System (6), das zweite System (7) und das dritte System (8) eine elektrische Versorgung (9) umfassen, **dadurch gekennzeichnet, dass** das Antriebssegment umfasst
- mindestens einen elektrischen Raumantriebsmotor (10), der dafür konfiguriert ist, von der Versorgung (9) des ersten oder des zweiten oder des dritten Systems (6, 7, 8) versorgt zu werden.

2. Segment nach dem vorstehenden Anspruch, wobei die Tragstruktur (5) Öffnungen (53) umfasst, die für ein Ausbringen von Solarpaneelen (11) der Versorgung (9) eines ersten Systems (6), welches einen künstlichen Satelliten bildet, durch die Öffnungen (53) geeignet sind.

3. Baugruppe, **dadurch gekennzeichnet, dass** sie umfasst:
- ein Antriebssegment (1) nach einem der vorstehenden Ansprüche, das dazu bestimmt ist, mindestens vorübergehend in einer Trägerrakete (2) transportiert zu werden.

4. Baugruppe nach Anspruch 3, wobei die elektrische Versorgung (9) Solarpaneele umfasst und die Tragstruktur (5) Öffnungen (53) umfasst, die für ein Ausbringen der Solarpaneele (11) geeignet sind.

5. Baugruppe nach Anspruch 3, wobei die elektrische Versorgung (9) einen Kerngenerator umfasst.

## Claims

1. A propulsion bay (1) intended to be transported, at least temporarily, in a space launcher (2), including:
- an adapter (3, 4, 5) for cooperation with at least one on-board system (6, 7, 8), temporarily, on the bay (1), the adapter including a carrier structure (5) including an inner space (51) for receiving a first on-board system (6) in the inner space (51), the carrier structure (5) including an end (52) for cooperation with a second on-board system (7), the first system (6) and the second system (7) forming artificial satellites, the adapter (4) being adapted for cooperation with a third on-board system (8) forming an additional system of liquid or solid space propulsion, the first system (6), the second system (7) and the third system (8) including a power supply (9), **characterized in that** the propulsion bay includes:
- at least one electric motor for space propulsion (10) configured to be powered by the power supply (9) of the first or second or third system (6, 7, 8).

2. The bay according to the preceding claim, wherein the carrier structure (5) includes openings (53) adapted for a deployment of solar panels (11) of the power supply (9) of a first system (6) forming artificial satellite, by the openings (53).

3. An assembly **characterized in that** it includes:
- a propulsion bay (1) intended to be transported, at least temporarily, in a space launcher (2) according to any of the preceding claims.

4. The assembly according to claim 3, wherein the power supply (9) includes solar panels and the carrier structure (5) includes openings (53) adapted for deployment of the solar panels (11).

5. The assembly according to claim 3, wherein the power supply (9) includes a nuclear generator.
